# EUROPÄISCHE PATENTSCHRIFT

(11) **EP 2 858 485 B1**
(45) Veröffentlichungstag und Bekanntmachung des Hinweises auf die Patenterteilung: **18.10.2017**
(21) Anmeldenummer: 13731663.4
(22) Anmeldetag: 22.05.2013
(51) Int. Cl.: A01K 61/60

(54) **ZUCHTANLAGE FÜR FISCHE UND/ODER ANDERE ZUR ZUCHT GEEIGNETE WASSERLEBEWESEN**
BREEDING FARM FOR FISH AND/OR OTHER AQUATIC CREATURES SUITABLE FOR BREEDING
INSTALLATION D'ÉLEVAGE DE POISSONS ET/OU D'AUTRES ANIMAUX AQUATIQUES APTES À L'ÉLEVAGE

(30) Priorität: 08.06.2012 DE 102012011283
(43) Veröffentlichungstag der Anmeldung: 15.04.2015
(73) Patentinhaber: Stefan Schröer Projektbetreuung GmbH, 49661 Cloppenburg (DE)
(72) Erfinder: SCHRÖER, Stefan, 49661 Cloppenburg (DE)
(74) Vertreter: Wickord, Wiro
(86) Internationale Anmeldenummer: PCT/DE2013/100188
(87) Internationale Veröffentlichungsnummer: WO 2013/182187

(56) Entgegenhaltungen:
- WO-A1-01/52637
- GR-A- 89 100 792
- JP-U- S6 239 470
- JP-U- S54 110 600
- US-A- 4 086 874
- US-A1- 2008 029 041

## Beschreibung

Die Erfindung betrifft eine zum Einsetzen in ein Gewässer geeignete Zuchtanlage für Fische und/oder andere zur Zucht geeignete Wasserlebewesen mit einer oberhalb eines Wasserspiegels des Gewässers vorgesehenen Arbeitsplattform nach dem Oberbegriff des Patentanspruchs 1.

Aus der DE 37 18 287 A1 ist eine Zuchtanlage für Fische bekannt, welche in stehende bzw. fließende Gewässer eingesetzt werden kann. Zur Aufnahme von Zuchtfischen umfasst die Zuchtanlage ein Netz- bzw. Foliengehege (Zuchtbecken), welches von einer Mehrzahl von untereinander über Streben verbundenen Auftriebskörpern getragen wird. An den Auftriebskörpern befestigte Haltestangen ragen in das Gewässer und spannen das Gehege auf. Indem die Haltestangen zusätzlich nach oben aus dem Gewässer herausragen und das Netz bzw. die Folie tragen, wird zugleich eine Bedachung gebildet, die eine kontrollierte Aufzucht von Wasservögeln in dem Gehege erlaubt bzw. vor Fisch- und Futterräubern schützt.

Aus der DE 37 27 390 A1 ist eine Fischzuchtanlage zum Einsetzen in ein Gewässer mit einem einzigen Auftriebskörper, einem von dem Auftriebskörper umgebenen und an dem Auftriebskörper unmittelbar gehaltenen Zuchtbecken und einer das Zuchtbecken überspannenden und ebenfalls unmittelbar an dem Auftriebskörper befestigten Traglufthalle bekannt. Das Zuchtbecken wird beispielsweise aus Netzen, Folienbahnen oder beschichtetem Gewebe gebildet. Optional können an einem einzigen Auftriebskörper zwei Aufzuchtbecken befestigt sein, die durch eine gemeinsame Traglufthalle als Bedachung überdeckt sind. Zwischen den zwei Aufzuchtbecken kann ein an dem Auftriebskörper befestigter Steg als Arbeitsplattform vorgesehen sein. Nachteilig bei der Anordnung ist, dass der Auftriebskörper in seiner Größe und Form auf das Aufzuchtbecken abzustimmen ist. Dies steht einer größenvariablen Gestaltung der Zuchtanlage entgegen. Darüber hinaus ist der Transport der Zuchtanlage mit einem einzigen Auftriebskörper aufwendig, da gebräuchliche Zuchtanlagen eine Länge im Bereich von 50 m und mehr aufweisen können. Zudem ist die Realisierung der Bedachung der Traglufthalle unter energetischen Gesichtspunkten nachteilig, und beim Eintreten in die Traglufthalle kann diese zusammenfallen, da das Volumen der Halle vergleichsweise gering ist.

Aus der GR 89 100 792 A ist eine Zuchtanlage für Zuchtfische und andere zur Zucht geeignete Wasserlebewesen mit einer Schwimmeinheit, einer daran festgelegten, oberhalb eines Wasserspiegels vorgesehene Arbeitsplattform und einem Zuchtbecken für die Zuchtfische beziehungsweise Wasserlebewesen bekannt. Das Zuchtbecken wird durch ein Fischernetz gebildet, welches an einer jedenfalls abschnittsweise unterhalb des Wasserspiegels vorgesehenen Tragstruktur gespannt beziehungsweise festgelegt ist.

Aus der US 4 086 874 A ist ebenfalls bekannt, ein Fischernetz zur Herstellung eines Zuchtbeckens vorzusehen. Das Fischernetz ist an Tragstreben festgelegt.

Aus der WO 2001/52637 A1 ist eine Zuchtstation mit einer Mehrzahl von Schwimmeinheiten bekannt, welche jeweils ein formstabiles Zuchtbecken für die Zuchtfische beziehungsweise Wasserlebewesen aufweist. Innerhalb der Zuchtstation sind die Schwimmeinheiten matrixartig angeordnet.

Aus der US 2008/029041 A1 ist eine Zuchtanlage mit einer Mehrzahl von zylindrischen Zuchtbecken fester Größe bekannt.

Aus der JP S62 39470 U und der JP S54 110600 U sind weiter modulare Konzepte für Zuchtanlagen bekannt, welche insbesondere Auftriebskörper mit einer an den Auftriebskörper gehaltenen Arbeitsplattform und einem Zuchtbecken vorsehen.

Aufgabe der vorliegenden Erfindung ist es, eine Zuchtanlage für Fische und/oder andere zur Zucht geeignete Wasserlebewesen derart modular zu gestalten, dass sie in einfacher Weise in ihrer Größe variiert und transportiert werden kann.

Zur Lösung der Aufgabe weist die Erfindung die Merkmale des Patentanspruchs 1 auf.

Der besondere Vorteil der Erfindung besteht darin, dass durch die Bildung der Schwimmeinheit aus einer Mehrzahl von untereinander verbundenen Tragmodulen eine modulare Zuchtanlage bereitgestellt wird, die in ihrer Größe an den Zuchtbedarf einerseits und die räumlichen Gegebenheiten des Gewässers andererseits angepasst werden kann. Beispielsweise kann die Zuchtanlage groß gestaltet werden, wenn das Gewässer dies zulässt. Aufgrund des modularen Aufbaus kann die Zuchtanlage auch in ihre Bestandteile zerlegt und transportiert werden. Durch die Möglichkeit, die Zuchtanlage modular zu zerlegen und zu transportieren, können beispielsweise Wartungsarbeiten außerhalb des Gewässers in wetterunabhängigen Räumlichkeiten statt bei ungünstigen Witterungsbedingungen auf dem Gewässer durchgeführt werden. Dies ist wesentlich schonender für die beteiligten Monteure und erlaubt auch die Reparatur und den Austausch einzelner Module während des laufenden Betriebes.

Zur Verbindung der Tragmodule untereinander können die Verbindungsmittel verwendet werden, die an den Tragrahmen der Tragmodule vorgesehen sind. Beispielsweise können die Tragmodule durch Ankerschrauben miteinander verbunden werden, wenn die Befestigungsmittel der Tragmodule als Bohrung ausgebildet sind. Zwischen benachbarten Tragmodulen kann hierbei ein Abstandshalter, beispielsweise ein abgelenktes Stück Rohr, vorgesehen sein. Durch das Vorsehen des Abstandshalters und die Verschraubung benachbarter Tragmodule wird ein hohes Maß an Flexibilität und Montagefreundlichkeit einerseits erreicht. Andererseits erhält die Schwimmeinheit ein hohes Maß an Stabilität, da die Relativbewegung miteinander verbundener Tragmodule eingeschränkt ist.

Nach der Erfindung ist das Zuchtbecken aus einer Mehrzahl von elastischen, flexiblen und lösbar miteinander verbundenen Flachkörpern gebildet. Vorteilhaft kommt durch das Vorsehen einer Mehrzahl von verbindbaren Flachkörpern auch bei dem Zuchtbecken der Modularitätsgedanke zum Ausdruck. Das Zuchtbecken kann hierdurch in einfacher Weise an die Geometrie der gesamten Zuchtanlage angepasst werden. Wird die Zuchtanlage beispielsweise durch das Vorsehen zusätzlicher Tragmodule vergrößert, kann in analoger Weise auch das Zuchtbecken durch das Vorsehen zusätzlicher Flachkörper an die Geometrie der Schwimmeinheit angepasst werden. Es entsteht demzufolge eine vollständig modulare Zuchtanlage, die sich durch ein besonders hohes Maß an Flexibilität auszeichnet.

Indem die Flachkörper elastisch und flexibel ausgebildet sind, werden diese vor Beschädigungen bzw. bei Niedrigwasser oder beim Ablassen von Wasser geschützt. Dies gilt gleichermaßen beim Ablassen des gesamten Wassers aus einem künstlichen Gewässer wie beim Abpumpen von Wasser aus dem Zuchtbecken. Letzteres führt dazu, dass infolge eines sich im Inneren des Zuchtbeckens bildenden Unterdrucks das Becken selbst zusammengedrückt wird.

Nach der Erfindung sind zum Verbinden der Flachkörper untereinander Schnellverbindungsmittel vorgesehen. Beispielsweise können als Schnellverbindungsmittel Reißverschlussverbindungen vorgesehen sein. Ebenso können in den Randbereichen der Flachkörper Ösen ausgebildet sein, die es erlauben, benachbarte Flachkörper durch ein durch die Ösen geführtes Seil miteinander zu verbinden. Weiterhin können Klettverschlussverbindungen bzw. Druckknöpfe als Verbindungsmittel vorgesehen sein. Ergänzend zu den Verbindungsmitteln können optional Zugentlastungen, beispielsweise Riemen, zwischen den benachbarten Flachkörpern vorgesehen werden. Vorteilhaft kann durch das Vorsehen der Schnellverbindungsmittel eine zügige Montage und Anpassung des Zuchtbeckens vor Ort realisiert werden. Zudem können defekte Flachkörper in einfacher Weise schnell und zuverlässig ausgetauscht bzw. zur Instandsetzung entnommen werden.

Durch das Vorsehen einer Mehrzahl von Auftriebskörpern, durch das Verbinden der Auftriebskörper mit einem Tragrahmen zu einem Tragmodul und durch die Kopplung einer Mehrzahl von Tragmodulen miteinander kann eine Schwimmeinheit variabler Größe und Form erstellt werden. Durch die variable Anzahl von Tragmodulen können die Breite, Länge und Form der Schwimmeinheit bedarfsgerecht geändert und insbesondere an die örtlichen Gegebenheiten angepasst werden. Zudem kann der Auftrieb über die Zahl der Auftriebskörper variiert und bedarfsgerecht festgelegt werden. Der einzelne Auftriebskörper und/oder die Tragmodule ist vergleichsweise klein und kann so bemessen sein, dass er in einfacher Weise gehandhabt und transportiert werden kann. Das schwimmfähige Tragmodul kann selbst auch größenmäßig variabel gestaltet werden. Die Größe kann insbesondere über die Anzahl der Auftriebskörper definiert werden, wobei der Tragrahmen auf diese Größe abgestimmt wird. Zudem kann über die Anzahl der Auftriebskörper der Auftrieb für das Tragmodul verändert werden.

Als benachbarte Baueinheit kann neben einem weiteren Tragmodul insbesondere auch ein Verbindungssteg, welcher zwischen zwei Tragmodulen vorgesehen ist, und/oder ein Zugangssteg dienen.

Der Tragrahmen ist den Auftriebskörpern bevorzugt auf einer dem Gewässer abgewandten Oberseite derselben zugewandt. Bevorzugt ist der Tragrahmen oberhalb der Wasseroberfläche vorgesehen. An dem Tragmodul können Stützmittel zur lagefesten Zuordnung der Auftriebskörper zu dem Tragrahmen, das heißt zur Positionierung der Auftriebskörper relativ zum Tragrahmen, sowie Festlegemittel zum Befestigen der Auftriebskörper an dem Tragrahmen vorgesehen sein.

Indem das Zuchtbecken nicht an den Auftriebskörper selbst, sondern an dem Tragrahmen des Tragmoduls vorgesehen ist, vereinfacht sich der konstruktive Aufbau der Auftriebskörper. Die Auftriebskörper können als einfach gestaltete Gleichteile in großer Stückzahl hergestellt werden. Das Gewicht des Zuchtbeckens stützt sich über den Tragrahmen über eine Mehrzahl von Auftriebskörpern ab. Es ist nicht so, dass ein einziger Auftriebskörper das gesamte Gewicht des Aufzuchtbeckens trägt.

Nach einer bevorzugten Ausführungsform der Erfindung weisen die Auftriebskörper jeweils eine befüllbare Hohlkammer auf, wobei zum Befüllen der Hohlkammer mit einem Fluid wenigstens eine verschließbare Öffnung vorgesehen ist. Vorteilhaft kann durch das Vorsehen einer mit zum Beispiel Wasser als Fluid befüllbaren Hohlkammer der Auftrieb jedes einzelnen Auftriebskörpers variabel eingestellt und den Anforderungen an das Tragmodul angepasst werden. Beispielsweise können Auftriebskörper, die aufgrund ihrer Lage eine besonders hohe Last tragen, nicht oder nur in geringem Maße mit dem Fluid befüllt werden. Demgegenüber können wenig beanspruchte Auftriebskörper in größerem Umfang mit Wasser befüllt werden mit der Folge, dass das Tragmodul im Wesentlichen eben in dem Gewässer schwimmt.

Nach einer Weiterbildung der Erfindung sind die Auftriebskörper fass- bzw. tonnenförmig ausgebildet mit zwei gegenüberliegenden Stirnflächen und einer die Stirnflächen verbindenden Mantelfläche. Vorteilhaft können die Auftriebskörper durch die fass- bzw. tonnenförmige Gestaltung besonders günstig hergestellt werden. Beispielsweise können ohnehin vorhandene bzw. vormals zu anderen Zwecken eingesetzte Fässer als Auftriebskörper Verwendung finden.

Nach einer Weiterbildung der Erfindung weist der Auftriebskörper zwei verschließbare Öffnungen zum Befüllen des Hohlraums mit dem Fluid auf, wobei die zwei verschließbaren Öffnungen beabstandet und vorzugsweise auf derselben Seite des Auftriebskörpers angeordnet sind. Vorteilhaft kann der Auftriebskörper durch das Vorsehen von zwei gegenüberliegenden Öffnungen in besonders einfacher Weise mit dem Fluid gefüllt werden. Hierzu wird der Auftriebskörper mit einer der beiden Öffnungen unter der Wasseroberfläche vorgesehen, während die zweite Öffnung oberhalb der Wasseroberfläche angeordnet ist. Sind beide Öffnungen unverschlossen, strömt das Fluid bis zur Höhe des Wasserspiegels in den Auftriebskörper ein. Demzufolge kann der Füllstand genau justiert und die Befüllung der Auftriebskörper mit dem Fluid in einfacher Weise erfolgen. Umgekehrt entleert sich der Auftriebskörper bei unverschlossenen Öffnungen ebenso einfach aus der unteren Öffnung, wenn er aus dem Wasser gehoben wird. Alternativ kann der Auftriebskörper auch gezielt durch die obere Öffnung befüllt oder entleert werden.

Ebenso können beide Öffnungen der Mantelfläche zugeordnet sein, wobei die Öffnungen möglichst einander gegenüberliegen sollten, sodass sich eine Öffnung unterhalb und eine oberhalb des Wasserspiegels befindet.

Nach einer Weiterbildung der Erfindung ist der Tragrahmen als ein geschlossener Tragrahmen ausgebildet. Vorteilhaft ist die Stabilität des Tragmoduls besonders hoch, wenn der Tragrahmen geschlossen ist. Insbesondere Quer- und Torsionskräfte können über den geschlossenen Tragrahmen besonders günstig abgestützt werden. Mit der mechanischen Stabilität steigt zudem die Robustheit der gesamten Anordnung.

Nach einer Weiterbildung der Erfindung sind die Befestigungsmittel und/oder die Verbindungsmittel zumindest abschnittsweise an einer Außenseite des Tragmoduls angeordnet und/oder regelmäßig beabstandet. Vorteilhaft ist die Befestigung des Zuchtbeckens an dem Tragmodul besonders einfach, wenn die Befestigungsmittel gut zugänglich vorgesehen sind. Die Platzierung der Befestigungsmittel an der Außenseite gewährleistet die gute Zugänglichkeit. Gleiches gilt für die Verbindungsmittel, über die das Tragmodul mit einer benachbarten Baueinheit, insbesondere einem weiteren Tragmodul und/oder einem Verbindungssteg zwischen parallelen Längsseiten sehr großer Zuchtbecken, verbunden werden kann. Indem die Befestigungsmittel bzw. die Verbindungsmittel regelmäßig beabstandet angeordnet sind, vereinfacht sich die Montage ebenfalls.

Nach einer Weiterbildung der Erfindung sind die Auftriebskörper regelmäßig angeordnet. Bevorzugt sind die Auftriebskörper matrixartig angeordnet. Durch die regelmäßige, insbesondere matrixartige Anordnung der Auftriebskörper erfährt das Tragmodul einen gleichmäßigen Auftrieb. Es liegt hierdurch besonders ruhig und stabil im Wasser. Überdies vereinfachen sich die Herstellung und Montage des Tragmoduls durch die regelmäßige Anordnung.

Nach einer Weiterbildung der Erfindung ist das Zuchtbecken wannenförmig ausgebildet mit zwei gegenüberliegenden Stirnflächen und einer die Stirnflächen verbindenden Mantelfläche. Hierbei ist jede Stirnfläche und die Mantelfläche aus mindestens einem Flachkörper gebildet. Vorteilhaft ergibt sich durch die Wannenform eine günstige Zuchtbeckenform mit hoher Stabilität und vorteilhaften Strömungseigenschaften. Letzteres gilt insbesondere, wenn im Bereich einer ersten Stirnseite des wannenförmigen Zuchtbeckens Frischwasser eingepumpt oder aus einem höher als der Wasserspiegel des umgebenden Gewässers gelegenen Gewässer eingeleitet wird und im Bereich einer zweiten Stirnseite Wasser aus dem Zuchtbecken in das umliegende Gewässer abgeführt wird.

Das Zuchtbecken kann auch oval oder rund aus mindestens einem Flachkörper ausgebildet werden. Das Frischwasser wird dann beispielsweise im oberen Bereich dem Zuchtbecken zugeführt, das heißt eingepumpt oder eingeleitet, und am tiefsten Punkt in das umgebende Gewässer abgeführt. Beispielsweise kann das Frischwasser im Beckenbodenbereich über die Mitte zugeführt und am oberen äußeren Rand über Abläufe des Beckens in das umgebende Gewässer abgeführt werden. Der so erzeugte Wasserstrom kann zum Beispiel genutzt werden, um einer schnellen Verschmutzung des Beckens durch Sink-, Schweb- oder Schwimmstoffe vorzubeugen und diese automatisch dem Ablauf zuzuführen.

Nach einer Weiterbildung der Erfindung sind zur Bildung der Arbeitsplattform Trittkörper an den Tragrahmen der die Schwimmeinheit bildenden Tragmodule und/oder an Verbindungsstegen zwischen parallelen Längsseiten sehr großer Zuchtbecken befestigt. Als Trittkörper können insbesondere Bohlen bzw. Platten vorgesehen sein. Vorteilhaft kann die Arbeitsplattform durch das Vorsehen von Trittkörpern stabil ausgebildet werden. Überdies können die optional ergänzten Trittkörper an die Größe der Schwimmeinheit angepasst werden. Insofern unterstützt das Vorsehen der an den Tragrahmen und den Verbindungsstegen zwischen parallelen Längsseiten sehr großer Zuchtbecken festlegbaren Trittkörper den Modulgedanken der gesamten Zuchtanlage. Die Trittkörper können hierbei für jedes Tragmodul und jeden Verbindungssteg individuell ausgebildet sein oder tragmodulübergreifend vorgesehen werden.

Nach einer Weiterbildung der Erfindung sind an dem Zuchtbecken ein unterhalb eines in dem Fischzuchtbecken vorgesehenen Zuchtwasserspiegels angeordneter Ablauf und ein Notüberlauf vorgesehen. Der Notüberlauf ist derart oberhalb des Ablaufs angeordnet, dass während des Normalbetriebs kein Wasser durch den Notüberlauf aus dem Fischzuchtbecken entweicht. Der Notüberlauf dient dazu, einen unzulässig hohen Anstieg des Zuchtwasserspiegels, der beispielsweise durch eine Verstopfung des regulären Ablaufs gegeben sein kann, zu vermeiden. Ein derartiger Anstieg könnte letzten Endes zu einem Absinken der Zuchtanlage bzw. zu einer Beschädigung des Zuchtbeckens und zum Entweichen der Fische aus dem Zuchtbecken in das umgebende Gewässer führen. Vorteilhaft kann durch das Vorsehen des Ablaufs - insbesondere im Zusammenwirken mit einer Pumpenanordnung oder dem Zufluss von Wasser aus einem Gewässer, dessen Wasserspiegel höher liegt als der des umgebenden Gewässers - ein Wasseraustausch in dem Zuchtbecken erreicht werden. Hierdurch können zum einen der Sauerstoff- und Planktongehalt des Wassers in dem Zuchtbecken erhöht und zum anderen die Temperatur und der pH-Wert des Wassers verändert werden. Zudem können in dem Zuchtbecken vorhandene Schwebestoffe, beispielsweise Ausscheidungen der Fische, über den Ablauf aus dem Zuchtbecken abtransportiert werden. Optional kann mehr als ein Ablauf vorgesehen sein. Beispielsweise können Abläufe in den Seitenflächen bzw. im Bereich des Beckengrunds vorgesehen sein. Über die Abläufe können Sink-, Schwebe- und Schwimmstoffe, insbesondere auch Ausscheidungen der Fische, aus dem Zuchtbecken abgeführt in das umgebende Gewässer und/oder zur Vermeidung von Überdüngung des umgebenden Gewässers über Rohre abgeleitet beziehungsweise einer Behandlung zugeführt werden.

Nach einer Weiterbildung der Erfindung weist mindestens ein Flachkörper zur Ausbildung des mindestens einen Ablaufs und/oder des Notüberlaufs eine großflächige Durchlassöffnung auf, wobei auf die großflächige Durchlassöffnung ein flächiges Abkleideelement so aufgebracht wird, dass die Durchlassöffnung durch das Abkleideelement teilweise überdeckt ist und räumlich durch das Abkleideelement getrennt der Ablauf und der Notüberlauf ausgebildet sind. Vorteilhaft können der mindestens eine Ablauf und der mindestens eine Notüberlauf durch das Vorsehen der großen Durchlassöffnung und des flächigen Abkleideelements in besonders einfacher Weise und räumlich variabel gestaltet werden. Beispielsweise kann durch die geeignete Ausgestaltung des Abkleideelements, insbesondere durch eine Variation der Größe und Form des Abkleideelements, die Größe und Form der Abläufe und Notüberläufe variiert werden. Hierbei wird durch die Wahl des Abkleideelements der wirksame Querschnitt der Abläufe bzw. Notüberläufe variiert. Die Durchlassöffnung kann mit Netzen unterschiedlicher Maschengröße versehen werden, um das unbeabsichtigte Entweichen von Lebewesen aus dem Zuchtbecken zu vermeiden.

Nach einer Weiterbildung der Erfindung können die Stirnflächen des Fischzuchtbeckens zur Realisierung eines Zulaufs, Ablaufs oder Notüberlaufs ganz oder teilweise aus Netzmaterial bestehen. Auf die Abläufe bzw. die Notüberläufe kann insofern verzichtet werden, oder sie werden zusätzlich zu den aus Netzmaterial gefertigten Stirnflächen vorgesehen.

Nach einer Weiterbildung der Erfindung ist eine das Zuchtbecken überspannende Bedachung vorgesehen. Die Bedachung wird beispielsweise durch eine Mehrzahl von miteinander verbundenen, flächigen Abdeckelementen und einer Mehrzahl von Tragelementen zum Stützen der Abdeckelemente gebildet. Vorteilhaft schützt die Bedachung zum einen vor Witterungseinflüssen, sodass die Bewirtschaftung des Zuchtbeckens für das Personal erheblich vereinfacht wird. Zum anderen schützt es den Fischbestand vor Raubtieren, insbesondere Kormoranen. Weiterhin begünstigt die Bedachung ein fischzuchtfreundliches Klima in dem überdachten Zuchtbecken, da die Temperatur im überdachten Bereich insbesondere in kalten Wintermonaten oberhalb der Umgebungstemperatur liegen kann. Indem die Bedachung Tragelemente zum Stützen der Abdeckelemente aufweist, wird eine selbsttragende Bedachung realisiert.

Nach einer Weiterbildung der Erfindung ist das Zuchtbecken zum Schutz der Zuchtfische vor Fraßfeinden mit einem Netz überzogen. Vorteilhaft kann insbesondere dann, wenn ein Witterungsschutz entbehrlich ist, statt einer Bedachung ein Netz vorgesehen sein. Das Netz bietet kostengünstig Schutz vor Fraßfeinden und kann in einfacher Weise montiert und demontiert werden.

In ihrer Größe ist die Bedachung dem Modularitätskonzept der gesamten Zuchtanlage folgend flexibel erweiterbar wie auch reduzierbar. Wird die Zuchtanlage beispielsweise durch das Vorsehen zusätzlicher Tragmodule für die Schwimmeinheit und zusätzlicher Flachkörper für das Zuchtbecken vergrößert, kann die Bedachung durch das Vorsehen zusätzlicher Tragelemente und zusätzlicher Abdeckelemente an die neue Größe der Zuchtanlage flexibel angepasst werden. Umgekehrt ist durch Entfernung von Tragemodulen, Flachkörpern, Trage- und Abdeckelementen ebenso eine Verkleinerung der Zuchtanlage möglich.
Nach einer Weiterbildung der Erfindung ist die gesamte Zuchtanlage unter Beachtung eines Rastermaßes ausgebildet. Anhand des Rastermaßes definieren sich die Länge und/oder die Breite und/oder die Höhe der Zuchtanlage sowie der einzelnen Auftriebskörper, der Tragmodule, der gesamten Schwimmeinheit, der Trittkörper, der das Zuchtbecken bildenden Flachkörper sowie der Abdeckelemente und der Tragelemente der Bedachung. Vorteilhaft kann durch das Vorsehen eines Rastermaßes ein besonders hohes Maß an Flexibilität und modulare Erweiter- und Reduzierbarkeit erreicht werden. Insbesondere können an dem Rastermaß ausgerichtete Komponenten (Auftriebskörper, Tragmodule, Rahmen der Tragmodule, Trittkörper, Flachkörper, Abdeckelemente, Tragelemente) bevorratet und zum Aufbau neuer Zuchtanlagen bzw. zur Veränderung der Größe und/oder der Form bestehender Zuchtanlagen verwendet werden. Die Fertigung der einzelnen Komponenten kann hierdurch in großer Stückzahl kostengünstig erfolgen.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: ein erfindungsgemäßes Tragmodul im Zusammenbau,
- Figur 2: das Tragmodul nach Figur 1 in einer Montagedarstellung,
- Figur 3: eine perspektivische Ansicht einer Zuchtanlage mit einer Mehrzahl von untereinander verbundenen Tragmodulen gemäß Figur 1,
- Figur 4: einen Schnitt A-A durch die Zuchtanlage gemäß Figur 3,
- Figur 5: eine perspektivische Darstellung einer Zuchtanlage mit Bedachung,
- Figur 6: eine Realisierung eines Ablaufs und eines Notüberlaufs an einem Zuchtbecken der Zuchtanlage,
- Figur 7: eine Draufsicht auf eine Zuchtanlage mit einer runden Grundform und
- Figur 8: eine Draufsicht auf eine langgestreckte Zuchtanlage mit Verbindungsstegen.

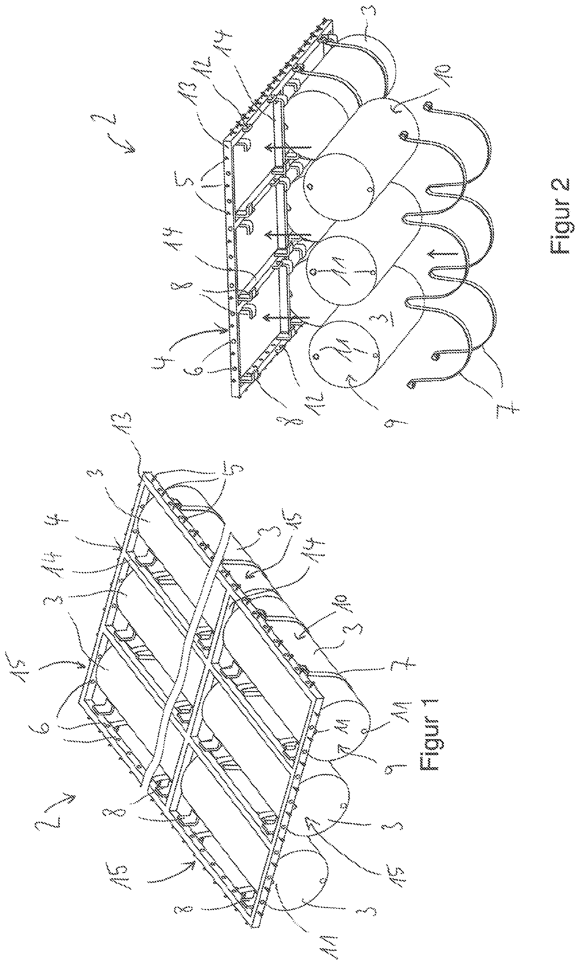

Ein zum Einsatz in ein Gewässer 1 konzipiertes Tragmodul 2 gemäß der Figuren 1 und 2 umfasst als zentrale Komponenten eine Mehrzahl von Auftriebskörpern 3, einen Tragrahmen 4, an dem Tragrahmen 4 vorgesehene Befestigungsmittel 5 und Verbindungsmittel 6 sowie Festlegemittel 7 und Stützmittel 8 zum Positionieren und Fixieren der Auftriebskörper 3 an dem Tragrahmen 4.

Als Auftriebskörper 3 sind im vorliegenden Ausführungsbeispiel der Erfindung sechs regelmäßig nach Art einer 2x3-Matrix angeordnete Fässer 3 vorgesehen. Die Fässer 3 sind dem Tragrahmen 4 liegend zugeordnet und weisen zwei gegenüberliegende Stirnflächen 9 und eine die Stirnflächen 9 verbindende zylindrische Mantelfläche 10 auf. Im Bereich der sichtbaren Stirnfläche 9 ist in einem unteren, dem Tragrahmen 4 abgewandten Bereich der Fässer 3 und einem oberen, dem Tragrahmen 4 zugewandten Bereich der Fässer 3 je eine verschließbare Öffnung 11 vorgesehen.

Durch die Anordnung der Öffnungen 11 kann das Innere des Fasses in einfacher Weise mit einem Fluid, insbesondere mit Wasser gefüllt und auf diese Weise die Auftriebskraft variiert werden. Zum Befüllen der Auftriebskörper 3 wird derselbe mit der unteren Öffnung 11 unter Wasser gedrückt, während die weitere Öffnung 11 oberhalb der Wasseroberfläche verbleibt. Werden dann beide Öffnungen freigegeben, strömt Wasser in den Auftriebskörper 3, und zwar genau so viel, wie durch den Wasserspiegel des umgebenden Gewässers 1 vorgegeben. Werden anschließend beide Öffnungen verschlossen, befindet sich in dem Auftriebskörper 3 ein definiertes Fluidvolumen, welches direkten Einfluss auf die Auftriebskraft hat. Der Auftriebskörper 3 kann auch durch die obere Öffnung 11 befüllt oder abgepumpt werden. Zur einfachen Entleerung des Auftriebskörpers 3 werden beide Öffnungen 11 freigegeben und der Auftriebskörper 3 mit dem Tragrahmen 4 aus dem Wasser gehoben, sodass das Fluid aus der unteren Öffnung 11 abfließen kann.

Zur Fixierung und positionsgenauen Anlage der Auftriebskörper 3 an dem Tragrahmen 4 sind an dem Tragrahmen 4 Stützmittel 8 vorgesehen. Die Stützmittel 8 sind exemplarisch nach Art von Profilen, insbesondere L-Profilen 8, ausgebildet. Hierbei sind je Auftriebskörper 3 vier Stützmittel 8 an dem Tragrahmen 4 befestigt. Die Stützmittel 8 sorgen zum einen für eine lagegenaue Positionierung der Auftriebskörper 3 in Bezug zum Tragrahmen 4 und - daraus folgend - zu einer exakten relativen Positionierung benachbarter Auftriebskörper 3 zueinander. Zum anderen sichern die Stützmittel 8 die Auftriebskörper 3 gegen ein insbesondere seitliches Verrutschen und/oder Verkanten und/oder Eindrücken, sowie eine gleichmäßige Druckverteilung des Tragrahmens 4 auf die Auftriebskörper 3.

Das Vorsehen von vier Stützelementen 8 zum Festlegen eines Auftriebskörpers 3 an dem Tragrahmen 4 ist lediglich exemplarisch. Beispielsweise können statt der vier nur zwei Stützmittel 8 vorgesehen sein. Die zwei Stützmittel 8 sind dann beispielsweise länglich ausgebildet und erstrecken sich über die halbe Fasslänge oder mehr.

Die mithilfe der Stützmittel 8 relativ zum Tragrahmen 4 positionierten Auftriebskörper 3 werden über Festlegemittel 7 an dem Tragrahmen 4 verspannt. Als Festlegemittel 7 sind insbesondere Spanngurte 7 vorgesehen. Exemplarisch werden jeweils zwei Spanngurte 7 verwendet, um eine Gruppe von mantelseitig benachbart angeordneten Auftriebskörpern 3 gemeinschaftlich an dem Tragrahmen 4 festzulegen. Hierzu sind am Tragrahmen 4 seitlich und zwischen den benachbarten Auftriebskörpern 3 Festlegeösen 12 vorgesehen, über die die Festlegemittel 7 mit dem Tragrahmen 4 zusammenwirken. Die Verbindungsstege 44 bei langen Zuchtbecken werden in gleicher Bauart ausgeführt. Ein Verbindungssteg kann in unterschiedlicher Breite ausgeführt werden, auch abweichend zur Breite einer Arbeitsplattform 23.

Die Ausbildung der Stützmittel 8 nach Art von Winkelprofilen und die Wahl der Festlegemittel 7 als Spanngurte sind lediglich exemplarisch. Ebenso ist lediglich exemplarisch eine Reihe benachbarter Auftriebskörper 3 mit einem gemeinsamen Spanngurt 7 an dem Tragrahmen 4 festgelegt. Selbstverständlich können andere als die dargestellten Stützmittel 8 zur Positionierung der Auftriebskörper 3 an dem Tragrahmen 4 ausgebildet und andere als die dargestellten Festlegemittel 7 zur Festlegung der Auftriebskörper 3 an dem Tragrahmen 4 verwendet werden. Weiter können selbstverständlich die Auftriebskörper 3 über individuelle Festlegemittel 7 einzeln an den Tragrahmen 4 befestigt werden. Die Anzahl von Festlegemittel 7 je Auftriebskörper 3 kann hierbei an die jeweiligen Erfordernisse und insbesondere an die Größe und Geometrie der Auftriebskörper 3 bzw. des Tragrahmens 4 angepasst werden. Bezüglich der Stützmittel 8 und der Festlegemittel 7 kommt jede zur Erfüllung der Positionier- und Verbindungsaufgabe geeignete Ausgestaltung infrage. Beispielsweise kann der Tragrahmen 4 selbst zur Positionierung der Auftriebskörper 3 relativ zu demselben dienen, so dass auf baulich separate Stützmittel 8 verzichtet wird. Bezüglich der Festlegemittel 7 kann durch geeignete Wahl eine lösbare oder unlösbare Festlegung der Auftriebskörper 3 an dem Tragrahmen 4 realisiert werden. Die Auftriebskörper 3 können beispielsweise an dem Tragrahmen 4 verschraubt oder mit demselben verschweißt werden.

Die Darstellung des Tragmoduls 2 mit sechs matrixartig angeordneten Auftriebskörper 3 an dem Tragrahmen 4 ist ebenfalls exemplarisch gewählt. Selbstverständlich können eine abweichende Zahl von Auftriebskörpern 3 vorgesehen werden (beispielsweise vierundzwanzig nach Art einer 4x6-Matrix angeordneten Fässer 3), und die Dimensionen des Tragmoduls 2 können entsprechend variiert werden. Insbesondere ist eine regelmäßige, insbesondere matrixartige Anordnung der Auftriebskörper 3 und/oder eine rechteckige Grundform des Tragmoduls 2 für den modularen Gedanken vorteilhaft, aber nicht zwingend.

Der Tragrahmen 4 ist als ein geschlossener Tragrahmen 4 ausgebildet. Er weist einen im Wesentlichen rechteckigen Querschnitt und einen im Wesentlichen ebenfalls rechteckigen, durch die Anzahl, Größe und Orientierung der Auftriebskörper 3 definierten äußeren Rahmen 13 sowie Quer- und Längsverstrebungen 14 auf. Der äußere Rahmen 13 sowie die Quer- und Längsverstrebungen 14 bilden gemeinsam den Tragrahmen 4.

An einer durch den äußeren Rahmen 13 des Tragrahmens 4 definierten Außenseite 15 des Tragmoduls 2 sind zum einen die Befestigungsmittel 5 und zum anderen die Verbindungsmittel 6 vorgesehen. Die Befestigungsmittel 5 dienen der Befestigung eines Zuchtbeckens 22 an der Außenseite 15 des Tragmoduls 2. Zu diesem Zweck sind die Befestigungsmittel 5 exemplarisch hakenförmig als Befestigungshaken 5 ausgebildet. Sie sind regelmäßig beabstandet an dem äußeren Rahmen 13 des Tragrahmens 4 vorgesehen. Die Verbindungsmittel 6 dienen zum Verbinden des Tragmoduls 2 mit einer benachbarten Baueinheit. Als benachbarte Baueinheit kann beispielsweise ein weiteres Tragmodul 2, ein Zugangssteg oder ein Verbindungssteg 44 vorgesehen sein. Die Verbindungsmittel 6 sind als Durchgangsbohrungen 6 ausgeführt. Zur lösbaren Verbindung des Tragmoduls 2 mit der benachbarten Baueinheit können beide miteinander verschraubt werden, wobei die Schraube durch die Bohrung 6 geführt wird. Zwischen dem Tragmodul 2 und der benachbarten Baueinheit kann zur Realisierung eines definierten seitlichen Abstands ein Abstandshalter vorgesehen sein. Der Abstandshalter kann beispielsweise nach Art eines Abstandsrohrs ausgeführt sein, wobei die Schraube durch das Abstandsrohr geführt wird und das Abstandsrohr mit einer Stirnseite derselben an der benachbarten Baueinheit einerseits und an dem äußeren Rahmen 13 des Tragmoduls 2 andererseits anliegt.

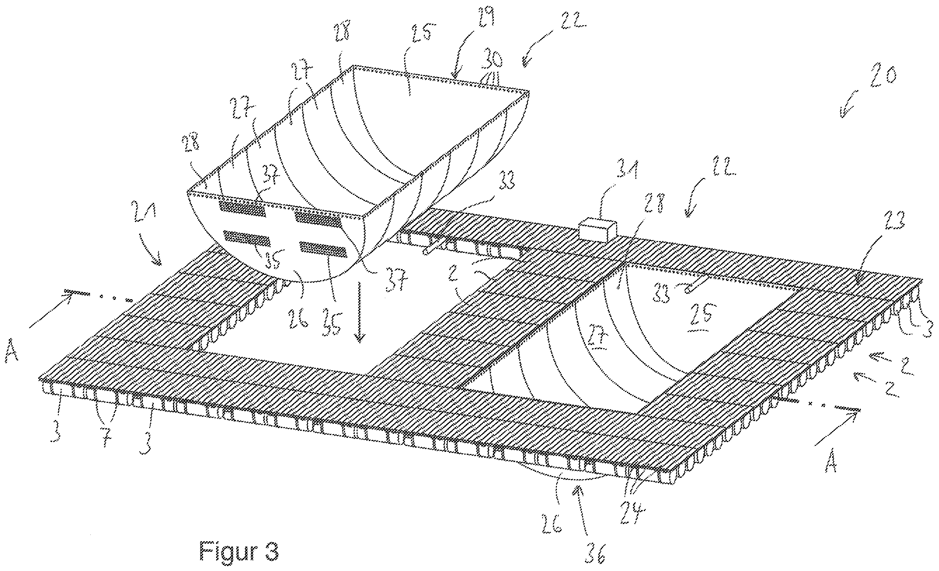

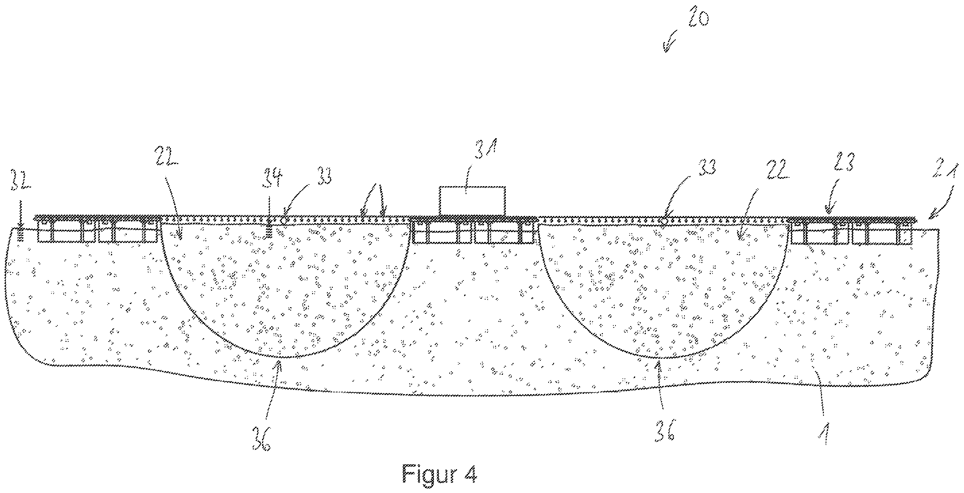

Eine Zuchtanlage 20 gemäß der Figuren 3 und 4 weist als wesentliche Komponenten eine Schwimmeinheit 21 und zwei der Aufzucht von Fischen dienenden Zuchtbecken 22 auf. Eine Zuchtanlage kann aber auch nur ein Zuchtbecken enthalten oder mehr als zwei. Die Schwimmeinheit 21 weist eine Mehrzahl von untereinander über die Verbindungsmittel 6 miteinander verbundenen Tragmodulen 2 auf. Die Tragrahmen 4 der Tragmodule 2 tragen eine Arbeitsplattform 23, welche sich wie die Schwimmeinheit 21 vollständig um die benachbarten Zuchtbecken 22 erstreckt. Die Arbeitsplattform 23 wird durch eine Mehrzahl von regelmäßig benachbart angeordneten Bohlen 24 als Trittkörper gebildet. Sie dient dazu, die Arbeit der Fischer zu erleichtern und den Zugang zu den Zuchtbecken 22 einfach zu gestalten. Darüber hinaus kann man auf und/oder an der Arbeitsplattform 23 und/oder den Verbindungsstegen 44 beispielsweise Futterautomaten oder Lüfter installieren.

Die Zuchtanlage 20 kann in einem natürlichen oder künstlich geschaffenen Freiluftgewässer zur Aufzucht von Fischen und/oder anderen Wasserlebewesen dienen. Als Gewässer 1 können stehende oder fließende Gewässer 1 dienen. Zur Fixierung der Zuchtanlage 20 in dem Gewässer 1 kann die Zuchtanlage 20 beispielsweise über einen Anker in dem Gewässer 1 halten oder an einem Rand des Gewässers 1 vertaut werden.

Die Zuchtanlage 20 ist modular ausgebildet. Die Größe der Zuchtanlage 20, insbesondere ihre Länge und Breite, können durch die Anzahl der zur Bildung der Schwimmeinheit 21 verwendeten Tragmodule 2 variiert werden. Beispielsweise kann zur Vergrößerung der Zuchtanlage 20 deren Länge durch das Einbringen zusätzlicher Tragmodule 2 vergrößert werden. Ebenfalls kann die geometrische Form der Zuchtanlage 20 verändert werden. Die im Wesentlichen rechteckige Form mit zwei benachbarten Zuchtbecken 22 nach den Figuren 3 und 4 ist lediglich exemplarisch gewählt. Es können durch geeignete Verbindung diverser Tragmodule 2 beliebige, insbesondere auch nicht rechteckige Zuchtanlagen 20 realisiert werden. Hierdurch besteht die Möglichkeit, die Zuchtanlage 20 in einfacher Weise an die örtlichen Gegebenheiten des Gewässers 1 anzupassen bzw. das Zuchtvolumen am Bedarf auszurichten.

Jedes Zuchtbecken 22 ist gebildet durch eine Mehrzahl von miteinander verbundenen Flachkörpern 25, 26, 27, 28. Die Flachkörper 25, 26, 27 28 sind durch Folien bzw. Planen gebildet, elastisch und flexibel. Beispielsweise sind die Flachkörper 25, 26, 27, 28 aus einem witterungsbeständigen Tuch gefertigt, wie es etwa unter der Bezeichnung "Big Bag" bei Futtersilos in der Landwirtschaft verwendet wird. Die Flachkörper 25, 26, 27, 28 sind lösbar miteinander verbunden und definieren - wenn sie mit Wasser gefüllt sind - die Geometrie der Zuchtbecken 22. Die Flachkörper 25, 26, 27, 28 sind so miteinander verbunden, dass die Zuchtbecken 22 eine Wannenform erhalten. Der leicht erhöhte Wasserspiegel 34 in Innern der Zuchtbecken 22 gegenüber dem des umgebenden Gewässers 1 erzeugt den nötigen Überdruck zur Aufrechterhaltung der Beckenform.

Beispielsweise können nicht dargestellte Gewichte in die Flachkörper 25, 26, 27, 28 eingearbeitet bzw. eingelegt oder an dieselben angehängt werden. Die Gewichte können beispielsweise in Form von Schnüren bzw. Ketten längs oder quer entlang der Flachkörper 25, 26, 27, 28 geführt werden. Durch die zusätzlichen Gewichte kann verhindert werden, dass das aus den Flachkörpern 25, 26, 27, 28 gebildete wannenförmige Zuchtbecken 22 etwa durch einströmendes bzw. durchströmendes Wasser auftreibt bzw. zusammenfällt.

Im Einzelnen ist zur Bildung der Zuchtbecken 22 jeweils ein erster Flachkörper 25 zur Definition einer ersten Stirnfläche des Zuchtbeckens 22, ein zweiter Flachkörper 26 zur Definition einer der ersten Stirnfläche gegenüberliegenden zweiten Stirnfläche des Zuchtbeckens 22 sowie mantelseitige Flachkörper 27, 28 vorgesehen. Hierbei sind innere Mantelflächen-Flachkörper 27 von einer konstanten Breite und den Stirnflächen-Flachkörpern 25, 26 zugewandte Mantelflächen-Flachkörper 28 im mittleren (unteren) Bereich schmaler ausgebildet als an den freien Randbereichen. Durch die spezielle Formgebung der randseitigen Mantelflächen-Flachkörper 28 sind die Stirnflächen-Flachkörper 25, 26 gegenüber der Vertikalen geneigt nach Art von Schrägflächen ausgerichtet. Hierdurch wird im Bereich der Verbindung der Stirnflächen-Flachkörper 25, 26 und der Mantelflächen-Flachkörper 27, 28 zumindest abschnittsweise ein Winkel von mehr als 90° gebildet, der strömungstechnische Vorteile bietet und überdies wenig anfällig ist für die Ansammlung von in dem Zuchtbecken 22 vorhandenen Sinkstoffen, beispielsweise Ausscheidungen der Zuchttiere.

An einem freien oberen Rand 29 des Zuchtbeckens 22 ist eine Vielzahl von bevorzugt regelmäßig beabstandeten Ösen 30 vorgesehen. Die Ösen 30 dienen dazu, das Zuchtbecken 22 in die ebenfalls regelmäßig angeordneten hakenförmigen Befestigungsmittel 5 der Tragmodule 2 einzusetzen. Auf diese Weise wird eine einfache und schnelle Befestigung der Zuchtbecken 22 an der Schwimmeinheit 21 realisiert.

Dem Modularitätsgedanken der Zuchtanlage 20 folgend kann die Größe der Aufzuchtbecken 22 durch die Anzahl der Mantelflächen-Flachkörper 27 in einfacher Weise variiert und an die Länge der Schwimmeinheit 21 angepasst werden. Zur Verbindung der Flachkörper 25, 26, 27, 28 untereinander sind nicht dargestellte Reißverschlussverbindungen als Schnellverbindungsmittel vorgesehen.

Die Zuchtbecken 22 können durch zusätzliche, nicht dargestellte senkrechte Trennwände derart unterteilt werden, dass in jedem Zuchtbecken 22 eine Mehrzahl von kleineren Einzelbecken geschaffen wird. Die Einzelbecken dienen beispielsweise der Aufzucht unterschiedlicher Fischarten oder der Trennung der Fische nach ihrem Alter, ihrem Sauerstoffbedarf oder Ihrer Futterverwertung. Zum Einsetzen der zusätzlichen senkrechten Trennwände, welche ebenfalls nach Art der Flachkörper 25, 26, 27, 28 aus Folien, Planen, Tuch oder Netzen elastisch und flexibel ausgebildet sind, können an den Flachkörpern 25, 26, 27, 28 zusätzliche Schnellverbindungsmittel, insbesondere zusätzliche Reißverschlussverbindungen vorgesehen sein.

Zur Verhinderung einer Verschmutzung der Schnellverbindungsmittel können diese abgedeckt ausgebildet sein. Es ist ebenfalls möglich, zusätzlich zu den Schnellverbindungsmitteln Zugentlastung oder dergleichen vorzusehen, die zwischen benachbarten Flachkörpern 25, 26, 27, 28 angeordnet sind und die Schnellverbindungsmittel entlasten.

In die Zuchtbecken 22 oder in die durch Trennwände geschaffenen Einzelbecken können Netzwannen eingehängt werden, die zum Zwecke des Abfischens angehoben werden können um den Fischbestand auf einen kleineren Raum zu konzentrieren. Bei kleinen Einzelbecken könnte so auch der gesamte Fischbestand aus dem Becken gehoben werden. Zum Aufhängen der Netze können gleichzeitig die Befestigungsmittel 5 zum Halten des Zuchtbeckens 22 genutzt werden.

Um einen Austausch und die Reinigung des in den Zuchtbecken 22 vorhandenen Wassers zu erreichen, weist die Zuchtanlage 20 eine einem Arbeitsraum 31 zugeordnete, nicht dargestellte Pumpenanordnung auf. Die Pumpenanordnung umfasst eine insbesondere nach Art einer Tauchpumpe ausgebildete Fördereinheit und eine oberhalb eines Wasserspiegels 32 des Gewässers 1 vorgesehene Antriebseinheit für die Pumpeinheit. Eine Pumpeinheit kann aus einer oder mehreren Pumpen pro Becken bestehen. Zusätzlich umfasst die Pumpeinheit Rohrzuführungen 33 zum Einbringen von Frischwasser aus dem Gewässer 1 in die Zuchtbecken 22. Die Rohrzuführungen 33 sind insbesondere an der Schwimmeinheit 21 gehalten und oberhalb eines in den Zuchtbecken 22 realisierten Zuchtwasserspiegels 34 vorgesehen. Wenn die Möglichkeit besteht, Frischwasser aus einem Gewässer 1 zuzuführen, dessen Wasserspiegel oberhalb des Wasserspiegels 32 des Gewässers 1 liegt, kann auf die Pumpenanordnung verzichtet werden; oder man hält die Pumpenanordnung für den Notfall vor, wenn das höher gelegene Gewässer keine ausreichende Wasserzufuhr gewährleisten kann, beispielsweise aufgrund von Trockenheit.

Statt wie dargestellt eine Pumpenanordnung für zwei Zuchtbecken 22 gemeinsam vorzusehen und die Zuchtbecken 22 über getrennte Rohrzuführungen 33 mit Frischwasser zu versorgen, kann eine separate Pumpenanordnung je Zuchtbecken 22 vorgesehen werden. Ebenfalls ist es möglich, eine Pumpenanordnung mit einer Mehrzahl von Pumpeinheiten vorzusehen. Hierdurch wird hinsichtlich der Frischwasserversorgung eine Redundanz geschaffen, die sicherstellt, dass auch beim Ausfall einer Pumpeinheit eine ausreichende Frischwasserversorgung der Zuchtbecken 22 realisiert ist.

Der Zuchtwasserspiegel 34 liegt um einige Zentimeter oberhalb des Wasserspiegels 32 des Gewässers 1. Indem der Zuchtwasserspiegel 34 oberhalb des Wasserspiegels 32 des Gewässers 1 liegt, herrscht im Zuchtbecken 22 ein Überdruck, der dafür sorgt, dass die aus elastischen und flexiblen Flachkörpern 25, 26, 27, 28 gebildeten Zuchtbecken 22 wannenförmig ausgeformt sind und ihr maximales Volumen erhalten. Da der Zuchtwasserspiegel 34 nur wenig oberhalb des Gewässerwasserspiegels 32 liegt und die Pumpeinheit der Pumpenanordnung in dem Gewässer 1 vorgesehen ist, ist die für den Betrieb der Pumpenanordnung erforderliche Energie gering.

Während die Rohrzuführung 33 der Pumpenanordnung dem die erste Stirnfläche des Zuchtbeckens 22 definierenden Flachkörper 25 zugeordnet ist, sind in dem gegenüberliegenden, die zweite Stirnfläche definierenden Flachkörper 26 unterhalb des Gewässerwasserspiegels 32 zwei Abläufe 35 ausgebildet, die es ermöglichen, dass Wasser aus dem Zuchtbecken 22 in das umliegende Gewässer 1 ausströmen und/oder zur Vermeidung der Überdüngung des umgebenden Gewässers 1 über Rohre abgeleitet und/oder einer Behandlung zugeführt werden kann. Die Abläufe 35 sind beispielsweise gitterartig ausgestaltet, wobei sichergestellt ist, dass in dem Zuchtbecken 22 gehaltene Fische nicht durch den Ablauf 35 in das umliegende Gewässer 1 gelangen können. Gleichwohl können über die Abläufe 35 zusammen mit dem austretenden Wasser in dem Zuchtbecken 22 vorhandene Schweb- und Schwimmstoffe, beispielsweise Ausscheidungen der Zuchttiere, abgeführt werden.

Optional können weitere, nicht dargestellte Abläufe in einem unteren Bereich des Zuchtbeckens 22 vorgesehen sein. Diese weiteren Abläufe dienen insbesondere dazu, Sinkstoffe von einem Grund 36 des Zuchtbeckens 22 in das umgebende Gewässer 1 abzuführen und/oder zur Vermeidung der Überdüngung des umgebenden Gewässers 1 über Rohre abzuleiten und/oder einer Behandlung zuzuführen.

Zusätzlich zu den Abläufen 35 sind an dem gleichen Flachkörper 26 zwei Notüberläufe 37 realisiert. Die Notüberläufe 37 liegen während des Normalbetriebs oberhalb des Zuchtwasserspiegels 34 des Zuchtbeckens 22. Sie sind so angeordnet, dass ein unzulässiger Anstieg des Zuchtwasserspiegels 34 in dem Zuchtbecken 22 verhindert wird, zu dem es beispielsweise kommen kann, wenn Abläufe 35 verstopft sind.

Die Größe der Abläufe 35 und der Notüberläufe 37 kann variiert werden, indem diese beispielsweise teilweise überdeckt und damit der wirksame Querschnitt reduziert wird. Zur einfachen Anbringung einer zumindest teilweisen Überdeckung an dem Ablauf 35 bzw. dem Notüberlauf 37 können Schnellverbindungsmittel, beispielsweise Klettverschlüsse rund um den Ablauf vorgesehen sein. Selbstverständlich können weitere Abläufe bzw. Notüberläufe auch an der Mantelfläche (Flachkörper 27, 28) des Zuchtbeckens 22 oder an der gegenüberliegenden Stirnfläche (Flachkörper 25) vorgesehen sein.

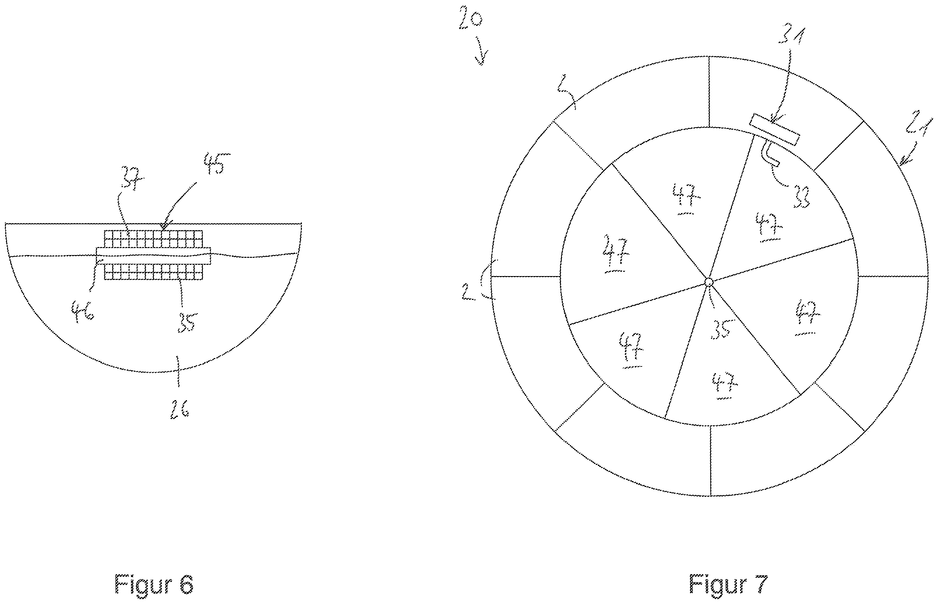

Eine alternative Ausgestaltung der Abläufe 35 und Notüberläufe 37 zeigt Figur 6. Gemäß Figur 6 weist der der zweiten Stirnfläche zugeordnete Flachkörper 26 eine großflächige Durchlassöffnung 45 auf. Die Durchlassöffnung 45 ist insbesondere mit einem Netz überspannt. Auf die Durchlassöffnung 45 wird zur Ausbildung des Ablaufs 35 und des Notüberlaufs 37 ein flächiges Abkleideelement 46 aufgelegt. Durch die Anlage des Abkleideelements 46 an die Durchlassöffnung 45 bildet sich der Ablauf 35 in einem unteren Teil der Durchlassöffnung 45 und räumlich getrennt hiervon der Notüberlauf 37 in einem oberen Bereich der Durchlassöffnung 45. Das Abkleideelement 46 ist beispielsweise über Schnellverschlüsse, insbesondere Klettverschlüsse mit dem Flachkörper 26 verbunden. Es erstreckt sich im Wesentlichen horizontal im Bereich des Zuchtwasserspiegels 34 derart, dass in bekannter Weise der Ablauf 35 unterhalb des Zuchtwasserspiegels 34 und der Notüberlauf 37 oberhalb des Zuchtwasserspiegels 34 vorgesehen ist. Indem das Abkleideelement 46 im Bereich des Zuchtwasserspiegels 34 vorgesehen ist, wird verhindert, dass das auf dem Wasser treibende Schwimmfutter für Zuchttiere durch den Ablauf 35 oder den Notüberlauf 37 aus dem Zuchtbecken 22 herausgetragen wird.

Nach einer alternativen, nicht dargestellten Ausführungsform der Erfindung können die Stirnflächen (Flachkörper 25, 26) des Zuchtbeckens 22 zur Realisierung eines Zulaufs, Ablaufs oder Notüberlaufs ganz oder teilweise aus Netzmaterial bestehen. Auf die Abläufe 35 bzw. die Notüberläufe 37 kann insofern verzichtet werden, oder sie werden zusätzlich zu den aus Netzmaterial gefertigten Stirnflächen (Flachkörper 25, 26) vorgesehen.

Zur Platzierung der Pumpeinheit der Antriebseinheit kann im Bereich des Arbeitsraums 31 und im Bereich der Abläufe 35 jeweils ein oder mehrere Auftriebskörper 3 ausgespart werden.

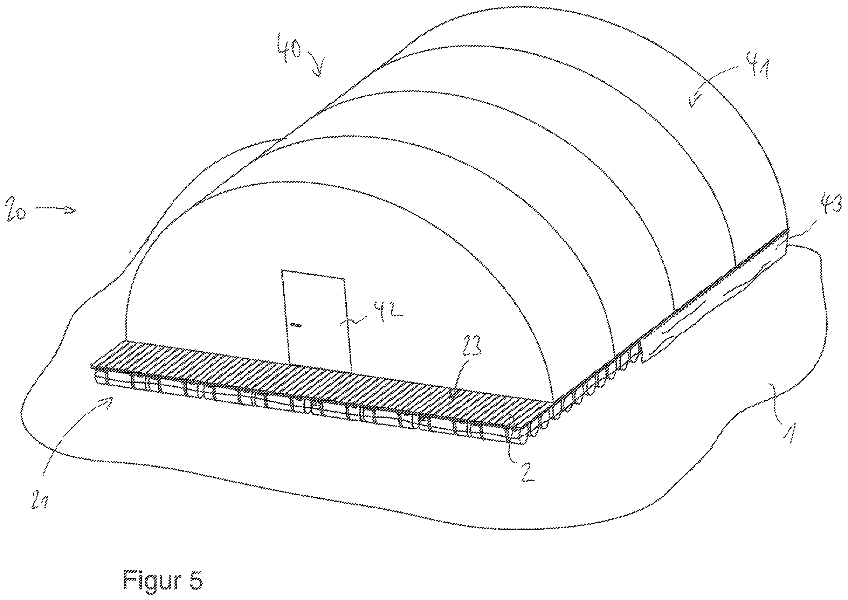

Zum Schutz der Zuchtanlage 20 vor Witterungseinflüssen und der Zuchtfische vor Fischräubern und Fressfeinden, insbesondere Kormoranen, kann die Zuchtanlage 20 gemäß Figur 5 eine Bedachung 40 aufweisen. Die Bedachung 40 erstreckt sich vorzugsweise über die komplette Breite der Zuchtanlage 20 und wird gebildet durch eine Mehrzahl lösbar miteinander verbundener Abdeckelemente 41. Die Abdeckelemente 41 werden durch nicht dargestellte Tragelemente gestützt. Die Bedachung 40 ist insofern beispielsweise nach Art eines Foliengewächshauses realisiert, kann aber auch aus anderen Materialien bestehen wie z.B. Netzen. Durch das Vorsehen der Tragelemente und der hierdurch gestützten Abdeckelemente 41 ist die Bedachung 40 als selbsttragende Bedachung ausgebildet. Stirnseitig ist eine Zugangstür 42 realisiert, selbstverständlich können auch beidseitig Zugangstüren 42 vorgesehen werden.

Gleiche Bauteile und Bauteilfunktionen sind durch gleiche Bezugszeichen gekennzeichnet.

An der Schwimmeinheit 21 ist nach der vorliegenden Ausführungsform der Erfindung eine äußere Sichtschürze 43 vorgesehen, die insbesondere an dem Tragrahmen 4 der zu der Schwimmeinheit 21 verbundenen Tragmodule 2 befestigt ist. Zur Aufhängung der Sichtschürze 43 können gleichzeitig die an den Außenseiten 15 der Tragmodule 2 ohnehin vorgesehenen Befestigungsmittel 5 verwendet werden. Beispielsweise kann die Sichtschürze 43 wie die Flachkörper 25, 26, 27, 28 des Zuchtbeckens 22 Ösen zum Ansetzen der Sichtschürze 43 in die Haken 5 aufweisen. Die Sichtschürze 43 schützt die Auftriebskörper 3 sowie die Zuchtbecken 22 vor Verschmutzung und vor in dem Gewässer 1 vorhandenem Treibgut. Treibgut kann zu direkter mechanischer Beschädigung führen oder auch zwischen den Komponenten der Zuchtanlage faulen. Darüber hinaus schützt die Sichtschutzschürze die Zuchtanlage vor einem schnellen Einfrieren. Einer Beschädigung der Zuchtanlage 20 wird hierdurch ebenfalls vorgebeugt. Außerdem kann die Sichtschutzschürze für den Fischer als Werbefläche dienen. Es kann dort zu diesem Zwecke beispielsweise eine Telefonnummer angegeben werden, unter der der gezüchtete Fisch erworben werden kann.

Infolge der Befestigung der Zuchtbecken 22, der Pumpenanordnung, der Bedachung 40 und der Sichtschürze 43 an der Schwimmeinheit 21 kann auf den einzelnen Auftriebskörpern 3 ein sehr unterschiedliches Gewicht abgestützt werden. Um gleichwohl eine gleichmäßige, ebene Lage der Zuchtanlage 20 in dem Gewässer 1 zu erreichen, können die Auftriebskörper 3 in unterschiedlichem Maße mit Wasser befüllt werden.

Frischwasser kann dem Zuchtbecken 22 nicht nur mittels der Pumpenanordnung zugeführt werden. Beispielsweise können unterhalb des Wasserspiegels ausgebildete natürliche Strömungsverhältnisse zum Zwecke der Frischwasserzufuhr genutzt werden. Ebenso können Belüftungseinrichtungen, beispielsweise Schaufelradlüfter oder Injektorlüfter, zum Sauerstoffeintrag einen Frischwasserstrom bereitstellen, wobei beispielsweise über die stirnseitigen Flachkörper 25, 26 der Wasseraustausch realisiert wird.

Die Geometrie der Zuchtanlage 20 als Rechteckform sowie das Vorsehen von zwei benachbart angeordneten Zuchtbecken 22 ist lediglich exemplarisch. Beispielsweise kann die Zuchtanlage 20 - wie in Figur 7 dargestellt - kreisförmig angeordnet sein. Hierbei bilden tortensegmentförmige äußere Tragmodule 2 die ringförmige Schwimmeinheit 21 der Zuchtanlage 20. Im Inneren des Rings (Schwimmeinheit 21) ist in gewohnter Weise das Zuchtbecken 22 vorgesehen. Das Zuchtbecken 22 ist durch eine Mehrzahl von im Wesentlichen dreieckförmigen Flachkörpern 47, welche in gewohnter Weise über Schnellverbindungsmittel miteinander verbunden sind, gebildet. Das Zuchtbecken 22 ist über die nicht dargestellten Befestigungsmittel 5, welche an dem Tragrahmen 4 der Tragmodule 2 vorgesehen sind, gehalten.

Über eine dem Arbeitsraum 31 zugeordnete Pumpenanordnung wird Frischwasser in das Zuchtbecken 22 eingepumpt. Vorliegend wird das Frischwasser über die gekrümmt ausgebildete Rohrzuführung 33 insbesondere tangential in das Zuchtbecken 22 geführt. Ein im Beckenbodenbereich vorgesehener Ablauf 35 dient dazu, Wasser sowie in dem Wasser vorhandene Sink- und Schwebestoffe aus dem Zuchtbecken 22 abzuführen. Zwischen der Rohrzuführung 33 und dem Ablauf 35 bildet sich eine insbesondere spiralförmige Strömung aus.

Statt das Frischwasser oben über die Rohrzuführung 33 zuzuführen und im Beckenbodenbereich über den Ablauf 35 aus dem Zuchtbecken 22 abzuführen, kann das Frischwasser im Beckenbodenbereich eingepumpt und am oberen Rand des Zuchtbeckens 22 über Abläufe 35 aus dem Becken abgeführt werden.

Der in der runden Zuchtanlage 20 erzeugte Wasserstrom kann zum Beispiel benutzt werden, um einer schnellen Verschmutzung des Zuchtbeckens 22 durch Sink-, Schwebe- oder Schwimmstoffe vorzubeugen bzw. diese automatisch dem Ablauf 35 zuzuführen.

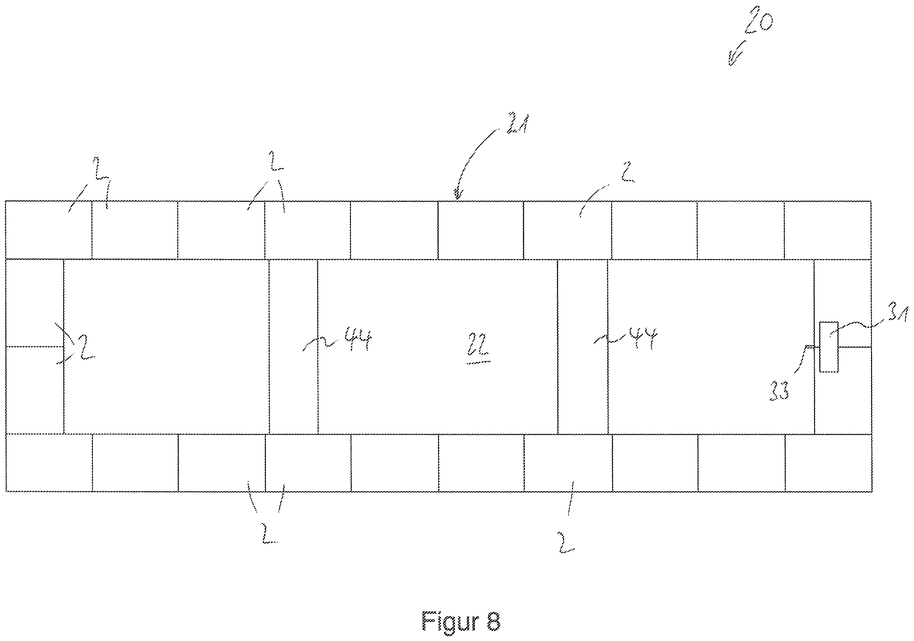

Nach einer weiteren alternativen Ausführungsform der Erfindung gemäß Figur 8 ist die Zuchtanlage 20 langgestreckt ausgebildet mit einem einzigen Zuchtbecken 22, welches von der rahmenförmigen Schwimmeinheit 21 umgeben ist. Die Schwimmeinheit 21 ist in gewohnter Weise durch eine Mehrzahl von Tragmodulen 2 gebildet. Um die Bewirtschaftung des vergleichsweise großen Zuchtbeckens 22 zu vereinfachen, sind zusätzlich zu den Tragmodulen 2 Verbindungsstege 44 vorgesehen, welche quer über das Zuchtbecken 22 geführt werden. Die Verbindungsstege 44 sind wie die Tragmodule 2 begehbar bzw. mit kleinen Maschinen befahrbar und zwischen gegenüberliegenden Tragmodulen 2 verbaut. Die Verbindungsstege 44 können sich - je nach Gewicht und Länge - über Auftriebskörper 3 im Wasser abstützen oder frei tragend, d. h. ohne Auftriebskörper 3 zwischen gegenüberliegenden Tragmodulen 2 verbaut sein. Die Verbindungsstege 44 können in unterschiedlicher Breite ausgeführt werden, auch abweichend zur Breite der Tragmodule 2.

Die dargestellten Ausführungsformen der Erfindung machen deutlich, dass hinsichtlich der geometrischen Ausgestaltung kaum Grenzen bestehen. Die Zuchtanlage 20 bzw. das Zuchtbecken 22 können beispielsweise auch oval oder abgewinkelt (z. B. L-förmig) ausgebildet sein. Das Zuchtbecken 22 wird aus einer Mehrzahl von gleichartigen Flachkörpern 25, 26, 27, 28, 47 gebildet, die zur Bildung des Zuchtbeckens 22 miteinander über Schnellverbindungsmittel verbunden werden. Zur konsequenten Fortführung des modularen Gedankens kann die gesamte Zuchtanlage 20 nach einem Rastermaß ausgebildet sein. Das Rastermaß definiert insbesondere die Längen und/oder Breiten und/oder Höhen der Auftriebskörper 3, der Tragrahmen 4, der Tragmodule 2, der Schwimmeinheit 21, der Trittkörper 24 bzw. der Arbeitsplattform 23, der Flachkörper 25, 26, 27, 28 des Zuchtbeckens 22 sowie der Abdeckelemente 41 und Tragelemente der Bedachung 40. Beispielsweise kann das Rastermaß orientiert sein an der Länge und dem Durchmesser der Auftriebskörper 3. Länge und Breite der anderen Komponenten können sich an den Dimensionen des Auftriebskörpers 3 orientieren, wobei funktionsnotwendige Abstandsmaße bei der Definition des Rastermaßes auf Basis der Dimension des Auftriebskörpers 3 Berücksichtigung finden.

## Patentansprüche

1. Zum Einsetzen in ein Gewässer geeignete Zuchtanlage (20) für Zuchtfische und/oder anderen zur Zucht geeigneten Wasserlebewesen mit einer oberhalb eines Wasserspiegels des Gewässers (1) vorgesehenen Arbeitsplattform (23), mit einem von dem Gewässer (1) umgebenen und mit Wasser zumindest teilweise gefüllten Zuchtbecken (22) zum Aufnehmen der Zuchtfische und/oder der anderen zur Zucht geeigneten Wasserlebewesen und mit einer die Arbeitsplattform (23) tragenden und das Zuchtbecken (22) umgebenden Schwimmeinheit (21), wobei die Zuchtanlage (20) als eine modulare Zuchtanlage (20) ausgebildet ist, wobei die Schwimmeinheit (21) eine Mehrzahl von miteinander verbundenen Tragmodulen (2) aufweist mit einer Mehrzahl von Auftriebskörpern (3) und mit Befestigungsmitteln (5) zum wenigstens mittelbaren Halten eines der Aufnahme von Zuchtfischen und/oder anderen zur Zucht geeigneten Wasserlebewesen dienenden Zuchtbeckens (22) an den Auftriebskörpern (3), wobei ein Volumen und/oder Gewicht der Auftriebskörper (3) so bemessen ist, dass das Tragmodul (2) in dem Gewässer schwimmt, mit einem Tragrahmen (4), an dem die Mehrzahl von Auftriebskörpern (3) über Festlegemittel (7) befestigt sind, wobei an dem Tragrahmen (4) die Befestigungsmittel (5) zum Halten des Zuchtbeckens (22) sowie Verbindungsmittel (6) zum Verbinden des Tragmoduls (3) mit einer benachbarten Baueinheit vorgesehen sind, wobei das Zuchtbecken (22) eine Mehrzahl von elastisch und flexibel ausgebildeten Flachkörpern (25, 26, 27, 28, 47) aufweist, **dadurch gekennzeichnet, dass** die Flachkörper (25, 26, 27, 28, 47) lösbar miteinander verbunden sind, dass zum Verbinden der Flachkörper (25, 26, 27, 28) zum Zuchtbecken (22) Schnellverbindungsmittel vorgesehen sind und dass Planen oder Folien als Flachkörper (25, 26, 27, 28) und Reißverschlussverbindungen als Schnellverbindungsmittel zur Verbindung der Flachkörper (25, 26, 27, 28) miteinander vorgesehen sind.

2. Zuchtanlage nach Anspruch 1, **dadurch gekennzeichnet, dass** die Auftriebskörper (3) als hohle Auftriebskörper (3) ausgebildet sind mit wenigstens einer verschließbaren Öffnung (11) zum Befüllen der Auftriebskörper (3) mit einem Fluid.

3. Zuchtanlage nach Anspruch 1 oder 2, **dadurch gekennzeichnet, dass** die Auftriebskörper (3) fass- bzw. tonnenförmig ausgebildet sind mit zwei gegenüberliegenden Stirnflächen (9) und einer die Stirnflächen (9) verbindenden Mantelfläche (10), und/oder dass zwei verschließbare Öffnungen (11) sich gegenüberliegend auf einer Seite (9) der Auftriebskörper (3) vorgesehen sind.

4. Zuchtanlage nach einem der Ansprüche 1 bis 3, **dadurch gekennzeichnet, dass** der Tragrahmen (4) als ein geschlossener Tragrahmen (4) ausgebildet ist.

5. Zuchtanlage nach einem der Ansprüche 1 bis 4, **dadurch gekennzeichnet, dass** die Befestigungsmittel (5) und/oder Verbindungsmittel (6) zumindest abschnittsweise einer Außenseite (15) des Tragmoduls (2) zugeordnet sind und/oder an dem Tragrahmen (4) vorgesehen sind und/oder regelmäßig beabstandet angeordnet sind, und/oder dass die Auftriebskörper (3) regelmäßig beabstandet angeordnet, insbesondere matrixartig, angeordnet sind, und/oder dass die Verbindungsmittel (6) nach Art von Bohrungen und/oder die Befestigungsmittel (5) hakenförmig ausgebildet sind.

6. Zuchtanlage nach Anspruch 1 oder 5, **dadurch gekennzeichnet, dass** das Zuchtbecken (22) wannenförmig ausgebildet ist mit zwei gegenüberliegenden Stirnflächen (25, 26) und eine die Stirnflächen (25, 26) verbindende Mantelfläche (27, 28), wobei jede Stirnfläche (25, 26) und die Mantelfläche (27, 28) aus mindestens jeweils einem Flachkörper (25, 26, 27, 28) gebildet sind.

7. Zuchtanlage nach einem der Ansprüche 1 bis 6, **dadurch gekennzeichnet, dass** zur Bildung der Arbeitsplattform (23) Trittkörper (24), insbesondere Bohlen oder Platten, an den Tragrahmen (4) der die Schwimmeinheit (21) bildenden Tragmodule (2) und/oder an Verbindungsstegen (44) befestigt sind.

8. Zuchtanlage nach einem der Ansprüche 1 bis 7, **dadurch gekennzeichnet, dass** an dem Zuchtbecken (22) ein unterhalb eines in dem Zuchtbecken (22) gebildeten Zuchtwasserspiegels (34) angeordneter Ablauf (35) und ein Notüberlauf (37) vorgesehen sind, wobei der Notüberlauf (37) derart oberhalb des Ablaufs (35) angeordnet ist, dass ein unzulässig hoher Anstieg des Zuchtwasserspiegels (34) vermieden wird.

9. Zuchtanlage nach Anspruch 8, **dadurch gekennzeichnet, dass** zur Ausbildung des mindestens einen Ablaufs (35) und des Notüberlaufs (37) der Flachkörper (25, 26, 27, 28, 47) eine großflächige Durchlassöffnung (45) aufweist, auf der ein flächiges Abkleideelement (46) so aufgebracht wird, dass die Durchlassöffnung (45) durch das Abkleideelement (46) teilweise überdeckt ist und räumlich durch das Abkleideelement (46) getrennt der Ablauf (35) und der Notüberlauf (37) ausgebildet sind.

10. Zuchtanlage nach einem der Ansprüche 1 bis 9, **dadurch gekennzeichnet, dass** eine das Zuchtbecken (22) überspannende Bedachung (40) vorgesehen ist, wobei die Bedachung (40) mindestens ein Abdeckelement (41) und eine Mehrzahl von Tragelementen zum Stützen der Abdeckelemente (41) aufweist, und/oder dass das Zuchtbecken (22) zum Schutz vor Fraßfeinden mit einem Netz überzogen ist.

11. Zuchtanlage nach zumindest der ersten Alternative des Anspruchs 10, **dadurch gekennzeichnet, dass** die Bedachung (40) als eine modulare Bedachung (40) ausgebildet ist mit einer veränderbaren Länge und/oder Breite und/oder Höhe, wobei zur Variation der Länge und/oder Breite und/oder Höhe der Bedachung (40) die Anzahl der Tragelemente und/oder Abdeckelemente (41) veränderbar ist.

12. Zuchtanlage nach einem der Ansprüche 1 bis 11, **dadurch gekennzeichnet, dass** eine Pumpenanordnung vorgesehen ist zum Einbringen von das Zuchtbecken (22) umgebendem Wasser in das Zuchtbecken (22), wobei die Pumpenanordnung so dimensioniert und betätigbar ist, dass der Zuchtwasserspiegel (34) im Inneren des Zuchtbeckens (22) oberhalb des Wasserspiegels (32) des Gewässers (1) liegt.

13. Zuchtanlage nach zumindest der Ansprüche 7 und 10, **dadurch gekennzeichnet, dass** ein Rastermaß ausgebildet ist zur Definition von Längen und/oder Breiten und/oder Höhen der Auftriebskörper, der die Schwimmeinheit (21) bildenden Tragmodule (2), der Tragrahmen (4) derselben, der Trittkörper (24) der Arbeitsplattform (23), der Flachkörper (25, 26, 27, 28, 47) des Zuchtbeckens (22) sowie der Abdeckelemente (41) und der Tragelemente der Bedachung (40).

## Claims

1. Breeding facility (20) for farmed fish and/or other aquatic creatures suitable for breeding, suitable for deployment in a body of water, comprising a working platform (23) provided above the water level of the body of water (1), comprising a breeding tank (22) enclosed by the body of water (1) and filled at least in part with water for accommodating the farmed fish and/or other aquatic creatures suitable for breeding, and comprising a floatation unit (21) supporting the working platform (23) and enclosing the breeding tank (22), the breeding facility (20) being in the form of a modular breeding facility (20), the floatation unit (21) having a plurality of interconnected support modules (2) comprising a plurality of buoyancy bodies (3) and comprising fixing means (5) for at least indirectly holding a breeding tank (22), which is for accommodating farmed fish and/or other aquatic creatures suitable for breeding, on the buoyancy bodies (3), a volume and/or weight of the buoyancy body (3) being set in such a way that the support module (2) floats in the body of water, comprising a support frame (4), to which the plurality of buoyancy bodies (3) are fixed via fastening means (7), the fixing means (5) for holding the breeding tank (22) and connecting means (6) for connecting the support module (3) to an adjacent assembly being provided on the support frame (4), the breeding tank (22) comprising a plurality of resiliently and flexibly formed planar bodies (25, 26, 27, 28, 47), **characterised in that** the planar bodies (25, 26, 27, 28, 47) are detachably interconnected, **in that** quick connection means are provided for connecting the planar bodies (25, 26, 27, 28) to the breeding tank (22), and **in that** awnings or films are provided as planar bodies (25, 26, 27, 28) and zips are provided as quick connection means for interconnecting the planar bodies (25, 26, 27, 28).

2. Breeding facility according to claim 1, **characterised in that** the buoyancy bodies (3) are formed as hollow buoyancy bodies (3) comprising at least one sealable opening (11) for filling the buoyancy bodies (3) with a fluid.

3. Breeding facility according to either claim 1 or claim 2, **characterised in that** the buoyancy bodies are formed drum-shaped or barrel-shaped, having two opposing end faces (9) and an outer surface (10) connecting the end faces (9), and/or **in that** two sealable openings (11) are provided opposite one another on a face (9) of the buoyancy bodies (3).

4. Breeding facility according to any of claims 1 to 3, **characterised in that** the support frame (4) is formed as a closed support frame (4).

5. Breeding facility according to any of claims 1 to 4, **characterised in that** the fixing means (5) and/or connecting means (6) are assigned at least in portions to an outer face (15) of the support module (2) and/or are provided on the support frame (4) and/or arranged regularly spaced, and/or **in that** the buoyancy bodies (3) are arranged regularly spaced, in particular in a matrix, and/or **in that** the connecting means (6) are formed as holes and/or the fixing means (5) are formed hook-shaped.

6. Breeding facility according to either claim 1 or claim 5, **characterised in that** the breeding tank (22) is formed tub-shaped, comprising two opposing end faces (25, 26) and an outer surface (27, 28) connecting the end faces (25, 26), each end face (25, 26) and the outer surface (27, 28) being formed from at least one planar body (25, 26, 27, 28) each.

7. Breeding facility according to any of claims 1 to 6, **characterised in that**, to form the working platform (23), walkable bodies (24), in particular planks or plates, are fixed to the support frame (4) of the support modules (2) forming the floatation unit (21) and/or to connecting webs (44).

8. Breeding facility according to any of claims 1 to 7, **characterised in that** a discharge (35), arranged below a breeding water level (34) formed in the breeding tank (22), and an emergency overflow (37) are provided on the breeding tank (22), the emergency overflow (37) being arranged above the discharge (35) in such a way that an unacceptably high rise in the breeding water level (34) is prevented.

9. Breeding facility according to claim 8, **characterised in that**, to form the at least one discharge (35) and the emergency overflow (37), the planar body (25, 26, 27, 28, 47) has a large-area through-opening (45), to which a planar lining element (46) is applied, in such a way that the through-opening (45) is covered in part by the lining element (46), and the discharge (35) and the emergency overflow (37) are formed spatially separated by the cover element (46).

10. Breeding facility according to any of claims 1 to 9, **characterised in that** a roofing (40) spanning the breeding tank (22) is provided, the roofing (40) comprising at least one cover element (41) and a plurality of support elements for supporting the cover elements (41), and/or **in that** the breeding tank (22) is covered with a net for protection from predators.

11. Breeding facility according to at least the first alternative of claim 10, **characterised in that** the roofing (40) is formed as a modular roofing (40) having a variable length and/or width and/or height, the number of support elements and/or cover elements (41) being variable so as to vary the length and/or width and/or height of the roofing (40).

12. Breeding facility according to any of claims 1 to 11, **characterised in that** a pump arrangement is provided for introducing water enclosing the breeding tank (22) into the breeding tank (22), the pump arrangement being dimensioned and actuable in such a way that the breeding water level (34) in the interior of the breeding tank (22) is above the water level (32) of the body of water (1).

13. Breeding facility according to at least claims 7 and 10, **characterised in that** a grid dimension is formed for defining lengths and/or widths and/or heights of the buoyancy bodies, of the support modules (2) forming the floatation unit (21), of the support frame (4) thereof, of the walkable bodies (24) of the working platform (23), of the planar bodies (25, 26, 27, 28, 47) of the breeding tank (22), and of the cover elements (41) and support elements of the roofing (40).

## Revendications

1. Installation d'élevage (20) de poissons et/ou d'autres animaux aquatiques aptes à l'élevage, adaptée à l'utilisation dans un plan d'eau, comprenant une plate-forme de travail (23) prévue au-dessus d'un niveau d'eau du plan d'eau (1), un bassin d'élevage (22) entouré du plan d'eau (1) et rempli au moins partiellement d'eau pour recevoir les poissons d'élevage et/ou les autres animaux aquatiques aptes à l'élevage et une unité flottante (21) portant la plate-forme de travail (23) et entourant le bassin d'élevage (22), l'installation d'élevage (20) étant réalisée sous la forme d'une installation d'élevage (20) modulaire, l'unité flottante (21) comportant une pluralité de modules porteurs (2) reliés les uns aux autres dotés d'une pluralité de flotteurs (3) et de moyens d'attache (5) pour le maintien au moins indirect sur les flotteurs (3) d'un bassin d'élevage (22) servant à recevoir des poissons d'élevage et/ou d'autres animaux aquatiques aptes à l'élevage, un volume et/ou poids des flotteurs (3) étant dimensionné de telle sorte que le module porteur (2) flotte dans le plan d'eau, et dotés d'un cadre porteur (4), auquel la pluralité de flotteurs (3) est fixée par des moyens de fixation (7), les moyens d'attache (5) pour maintenir le bassin d'élevage (22) et des moyens de liaison (6) pour relier le module porteur (3) à un sous-ensemble voisin étant prévus sur le cadre porteur (4), le bassin d'élevage (22) comportant une pluralité de corps plats (25, 26, 27, 28, 47) réalisés élastiques et flexibles, **caractérisée en ce que** les corps plats (25, 26, 27, 28, 47) sont reliés les uns aux autres de manière détachable, **en ce que** des moyens de liaison rapide sont prévus pour relier les corps plats (25, 26, 27, 28) au bassin d'élevage (22) et **en ce que** des bâches ou des feuilles sont prévues en guise de corps plats (25, 26, 27, 28) et des liaisons par fermeture à glissière en guise de moyens de liaison rapide pour relier les corps plats (25, 26, 27, 28) entre eux.

2. Installation d'élevage selon la revendication 1, **caractérisée en ce que** les flotteurs (3) sont réalisés sous la forme de flotteurs (3) creux comprenant au moins une ouverture (11) qui peut être fermée pour remplir les flotteurs (3) avec un fluide.

3. Installation d'élevage selon la revendication 1 ou 2, **caractérisée en ce que** les flotteurs (3) sont réalisés en forme de fût ou de tonneau, avec deux faces d'extrémité (9) opposées et une surface latérale (9) reliant les faces d'extrémité (9), et/ou **en ce que** deux ouvertures (11) qui peuvent être fermées sont prévues l'une en face de l'autre sur un côté des flotteurs (3).

4. Installation d'élevage selon l'une des revendications 1 à 3, **caractérisée en ce que** le cadre porteur (4) est réalisé sous la forme d'un cadre porteur (4) fermé.

5. Installation d'élevage selon l'une des revendications 1 à 4, **caractérisée en ce que** les moyens d'attache (5) et/ou les moyens de liaison (6) sont associés au moins sur certaines parties à un côté extérieur (15) du module porteur (2) et/ou sont prévus sur le cadre porteur (4) et/ou sont disposés espacés de manière régulière, et/ou **en ce que** les flotteurs (3) sont disposés espacés de manière régulière, en particulier disposés en matrice, et/ou **en ce que** les moyens de liaison (6) sont réalisés à la manière de trous et/ou les moyens d'attache (5) sont réalisés en forme de crochet.

6. Installation d'élevage selon la revendication 1 ou 5, **caractérisée en ce que** le bassin d'élevage (22) est réalisé en forme de cuve, avec deux faces d'extrémité (25, 26) opposées et une surface latérale (27, 28) reliant les faces d'extrémité (25, 26), chaque face d'extrémité (25, 26) et la surface latérale (27, 28) étant formées à partir d'au moins respectivement un corps plat (25, 26, 27, 28).

7. Installation d'élevage selon l'une des revendications 1 à 6, **caractérisée en ce que**, pour former la plate-forme de travail (23), des corps (24) sur lesquels il est possible de marcher, en particulier des madriers ou des plaques, sont fixés au cadre porteur (4) des modules porteurs (2) formant l'unité flottante (21) et/ou à des passerelles (44).

8. Installation d'élevage selon l'une des revendications 1 à 7, **caractérisée en ce qu'**un organe d'écoulement (35) disposé en-dessous d'un niveau d'eau d'élevage (34) formé dans le bassin d'élevage (22) et un déversoir de secours (37) sont prévus sur le bassin d'élevage (22), le déversoir de secours (37) étant disposé de telle manière au-dessus de l'organe d'écoulement (35) qu'une montée excessive du niveau d'eau d'élevage (34) est empêchée.

9. Installation d'élevage selon la revendication 8, **caractérisée en ce que**, pour former l'au moins un organe d'écoulement (35) et le déversoir de secours (37), le corps plat (25, 26, 27, 28, 47) comporte une ouverture de passage (45) à grande surface, sur laquelle est appliqué un élément de revêtement plat (46) de telle manière que l'ouverture de passage (45) est partiellement recouverte par l'élément de revêtement (46) et que l'organe d'écoulement (35) et le déversoir de secours (37) sont réalisés de manière séparée dans l'espace par l'élément de revêtement (46).

10. Installation d'élevage selon l'une des revendications 1 à 9, **caractérisée en ce qu'**une couverture (40) recouvrant le bassin d'élevage (22) est prévue, la couverture (40) comportant au moins un élément de recouvrement (41) et une pluralité d'éléments porteurs pour soutenir les éléments de recouvrement (41), et/ou **en ce que** le bassin d'élevage (22) est recouvert d'un filet pour la protection contre les prédateurs.

11. Installation d'élevage selon au moins la première alternative de la revendication 10, **caractérisée en ce que** la couverture (40) est réalisée sous la forme d'une couverture (40) modulaire, avec une longueur et/ou une largeur et/ou une hauteur pouvant être modifiées, le nombre des éléments porteurs et/ou éléments de recouvrement (41) pouvant être modifié pour modifier la longueur et/ou la largeur et/ou la hauteur de la couverture (40).

12. Installation d'élevage selon l'une des revendications 1 à 11, **caractérisée en ce qu'**un ensemble de pompes est prévu pour introduire de l'eau entourant le bassin d'élevage (22) dans le bassin d'élevage (22), l'ensemble de pompes étant dimensionné et actionnable de telle manière que le niveau d'eau d'élevage (34) à l'intérieur du bassin d'élevage (22) se trouve au-dessus du niveau d'eau (32) du plan d'eau (1).

13. Installation d'élevage selon au moins une des revendications 7 et 10, **caractérisée en ce qu'**une dimension modulaire est formée pour définir des longueurs et/ou largeurs et/ou hauteurs des flotteurs, des modules porteurs (2) formant l'unité flottante (21), du cadre porteur (4) de ceux-ci, des corps (24) sur lesquels il est possible de marcher de la plate-forme de travail (23), des corps plats (25, 26, 27, 28, 47) du bassin d'élevage (22) ainsi que des éléments de recouvrement (41) et des éléments porteurs de la couverture (40).
